# FASCICULE DE BREVET EUROPEEN

(11) **EP 1 036 959 B1**
(45) Date de publication et mention de la délivrance du brevet: **12.05.2004**
(21) Numéro de dépôt: 00400267.1
(22) Date de dépôt: 31.01.2000
(51) Int. Cl.: F16H 59/02

(54) **Dispositif de commande impulsionnelle de passage de vitesse**
Vorrichtung zur schrittweisen Schaltsteuerung eines Getriebes
Device for step by step shift control of a transmission

(30) Priorité: 15.03.1999 FR 9903279
(43) Date de publication de la demande: 20.09.2000
(73) Titulaire: Teleflex Automotive France SA, 74300 Cluses (FR)
(72) Inventeur: Rapin, Georges, 74300 Cluses (FR); Carre, Eric, 72210 Roeze-sur Sarthe (FR)
(74) Mandataire: Ramey, Daniel

(56) Documents cités:
- EP-A- 0 331 797
- EP-A- 0 357 274
- EP-A- 0 846 897
- US-A- 4 215 596
- US-A- 5 540 114

## Description

L'invention concerne un dispositif de commande impulsionnelle de passage de vitesse, en particulier pour véhicule automobile, ce dispositif comprenant un levier de commande déplaçable dans des directions perpendiculaires entre une première position de commande automatique, une deuxième position de commande manuelle et deux positions de commande impulsionnelle, des moyens de commutation commandés par le levier étant prévus pour produire des signaux électriques dans lesdites positions du levier, ces signaux étant appliqués à des moyens de traitement de l'information pour commander le passage des vitesses.

Des moyens de rappel sont associés au levier pour le solliciter vers sa deuxième position à partir de ses deux positions de commande impulsionnelle.

Un tel dispositif combine les avantages d'une boîte de vitesses automatique et d'une boîte de vitesses à commande manuelle, le conducteur du véhicule bénéficiant de ces deux possibilités et passant de l'une à l'autre comme il le souhaite.

On a déjà proposé dans la demande EP-A-846 897, qui correspond à l'état de la technique la plus proche, du même déposant, d'utiliser des microcommutateurs à deux états de conduction actionnés par des poussoirs déplacés par le levier, pour produire des signaux de commande de passage de vitesse. Ce dispositif connu est avantageux du point de vue du coût, par rapport à d'autres solutions dans lesquelles on utilise des capteurs à effet Hall ou analogue, mais l'association des microcommutateurs à des poussoirs d'actionnement ne permet pas de maîtriser les dispersions de cotes, ce qui entraîne des imprécisions dans la commande impulsionnelle des vitesses.

On connaît également, par le document EP-A-0 357 274, un dispositif de commande dans lequel un levier est déplaçable dans les fentes formées dans deux plaques parallèles guidées dans un boîtier et déplaçables dans des directions perpendiculaires, de sorte que, quand le levier est déplacé dans l'une de ces directions, il entraîne avec lui une des deux plaques sans bouger l'autre, et inversement, lesdites plaques formant des écrans entre des émetteurs et des récepteurs associés aux différentes positions du levier. Toutefois, dans ce dispositif connu, aucun moye ne permet de déplacer le levier sans déplacer au moins l'une des deux plaques avec lui.

L'invention a notamment pour but d'éviter les inconvénients précités de façon simple, efficace et économique à ce problème tout en améliorant la fiabilité de la commande.

Elle propose, à cet effet, un dispositif de commande impulsionnelle de passage de vitesse, comprenant un levier de commande déplaçable dans des directions perpendiculaires entre au moins une première position de commande automatique, une deuxième position de commande manuelle et deux positions de commande impulsionnelle, des moyens de commutation commandés par le levier pour produire des signaux électriques dans desdites positions du levier, et des moyens de rappel du levier dans sa deuxième position à partie de ses deux positions de commande impulsionnelle, caractérisé en ce que lesdits moyens de commutation comprennent une source lumineuse associée à deux photorécepteurs, et en ce que le levier est solidarisé dans sa deuxième position avec des moyens formant écran, qui comprennent une plaquette guidée en translation sur un coulisseau parallèlement à la direction de déplacement du levier entre sa première et sa deuxième position, le coulisseau étant lui-même guidé en translation parallèlement à la direction de déplacement du levier entre ses deux positions de commande impulsionnelle, la source lumineuse et les photorécepteurs précités étant agencés de part et d'autre de la plaquette et de sa trajectoire en translation, le levier étant solidarisable avec les moyens formant écran par déplacement de sa première position et désolidarisables des moyens formant écran par déplacement de sa deuxième position dans sa première position.

Dans le dispositif selon l'invention, le levier est automatiquement désolidarisé des moyens formant écran quand il est déplacé de sa position de commande manuelle à sa position de commande automatique, et ne risque plus alors de déplacer accidentellement les moyens formant écran quand il est en position de commande automatique, ce qui évite les incidents de fonctionnement et améliore la fiabilité et la sécurité.

Le dispositif selon l'invention a de plus l'avantage d'utiliser des moyens de commutation sans contact du type optoélectronique, qui génèrent des signaux de commande en conséquence de la coupure ou du rétablissement d'un faisceau lumineux. Ce dispositif comprend peu de pièces mobiles, il est peu sujet à l'usure, il est facile à assembler et économique (le nombre de pièces est réduit et les composants sont bon marché) et il est pratiquement insensible à l'environnement. Les dispersions de cotes dans ce dispositif sont beaucoup plus faibles que dans la technique antérieure et la précision de la commande est plus grande.

Avantageusement, la source lumineuse est une diode électroluminescente émettant dans l'infrarouge
et les photorécepteurs sont des phototransistors fonctionnant dans l'infrarouge.

Un tel émetteur et les deux récepteurs associés sont particulièrement bon marché.

Ils sont de plus insensibles ou très peu sensibles à la lumière ambiante, à la poussière, à l'humidité, à l'eau, aux variations de température et au champ magnétique.

Dans ce mode de réalisation, une partie du levier vient s'appliquer sur la plaquette dans la deuxième position du levier et la déplace en translation sur le coulisseau à l'encontre de l'action d'un moyen de rappel, cette partie du levier s'engageant simultanément dans une encoche du coulisseau et y restant maintenue par tout moyen approprié, par exemple par friction, par encliquetage, etc.

Le levier étant ainsi solidaire du coulisseau, peut déplacer ce dernier entre deux positions opposées correspondant aux deux positions de commande impulsionnelle, la plaquette portée par le coulisseau étant déplacée avec ce dernier pour démasquer un photorécepteur en l'exposant au flux lumineux émis par la source, tout en laissant l'autre photorécepteur masqué, et inversement quand le levier déplace le coulisseau dans le sens opposé.

Selon encore une autre caractéristique de l'invention, le coulisseau est associé à des moyens formant point dur, tels qu'une bille ou un poussoir chargé par un ressort et s'engageant dans une encoche du coulisseau lorsque celui-ci est dans une position intermédiaire située entre les deux positions de commande impulsionnelle de vitesse.

Cet unique point dur est suffisant pour empêcher tout déplacement accidentel du coulisseau vers l'une ou l'autre des positions de commande impulsionnelle.

Selon une autre caractéristique avantageuse de l'invention, la plaquette, le coulisseau, leurs moyens de rappel, la source lumineuse et les deux photorécepteurs associés, avec des moyens d'alimentation et de connexion de la source et des photorécepteurs, sont montés dans un boîtier qui est lui-même fixé sur le carter de montage du levier de commande.

Ce boîtier et les composants qu'il contient constituent un sous-ensemble que l'on peut préparer indépendamment et qu'il suffit de fixer ensuite sur le carter de montage du levier de commande en le raccordant à un circuit électrique approprié, ce qui simplifie nettement le montage et l'installation d'un dispositif selon l'invention. De plus, ce sous-ensemble forme un module standard que l'on peut monter sur une commande de vitesse préexistante.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 représente schématiquement une grille de vitesses d'un dispositif de commande selon l'invention ;
- la figure 2 est une vue schématique en coupe transversale de ce dispositif, le levier étant dans la position D ;
- la figure 3 est une vue schématique partielle en coupe selon la ligne III-III de la figure 2 ;
- la figure 4 représente schématiquement l'implantation de la source lumineuse et des photorécepteurs ;
- la figure 5 est une vue schématique partielle en perspective du dispositif de commande selon l'invention, dans la position D ;
- la figure 6 est une vue schématique partielle en perspective de ce dispositif dans la position M ;
- la figure 7 est une vue en coupe transversale, semblable à la figure 2, mais représentant le dispositif dans la position M ;
- la figure 8 est une vue semblable à la figure 7, mais représentant le dispositif dans une position de commande impulsionnelle de passage à la vitesse inférieure.

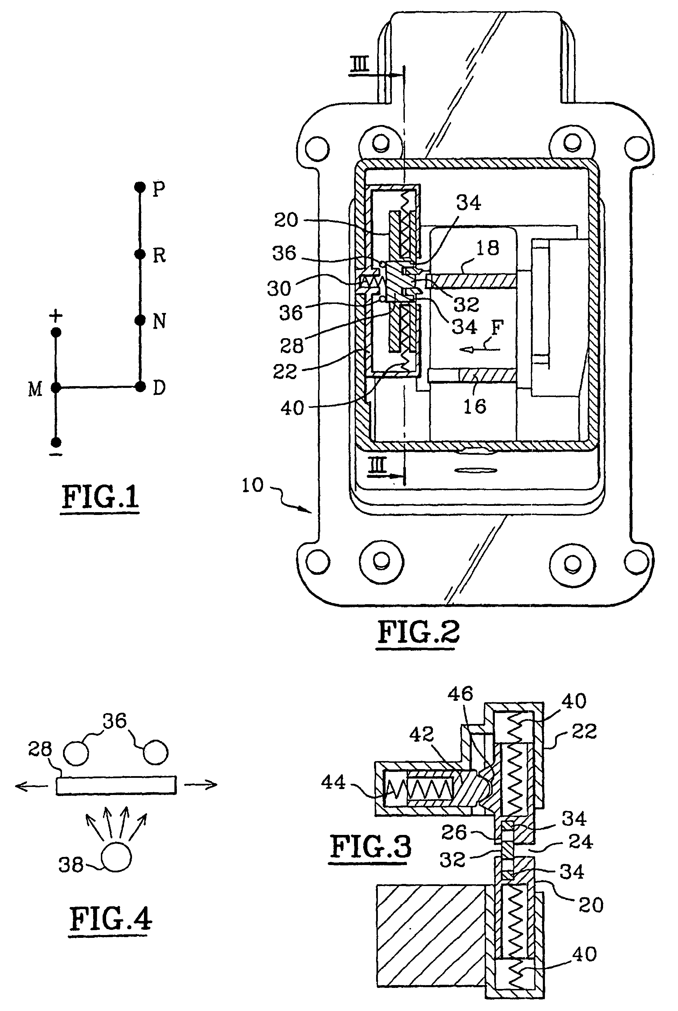

Le dispositif de commande de passage de vitesse représenté aux dessins annexés comprend un levier de commande qui est déplaçable dans une grille de vitesses entre un certain nombre de positions, telles que celles représentées en figure 1, comprenant les positions P (stationnement), R (marche arrière), N (point mort) et D (drive ou route), qui sont les positions classiques de commande d'une boîte de vitesses automatique, avec en outre une position M (commande manuelle) située à hauteur de la position D et placée entre deux positions + et - (passage à la vitesse supérieure et passage à la vitesse inférieure, respectivement).

Quand le levier est amené de la position D dans la position M, il suffit de le déplacer vers la position + ou la position - pour commander le passage à la vitesse supérieure ou le passage à la vitesse inférieure, respectivement, et ainsi bénéficier des avantages d'une boîte de vitesses à commande manuelle. Le levier étant dans la position M peut être ramené dans la position D, dans laquelle la boîte de vitesses est commandée de façon automatique.

Le dispositif selon l'invention comprend un carter 10 de fixation sur une partie rigide du véhicule, ce carter comprenant des moyens (non représentés) de montage d'un levier de commande 12 en rotation autour de deux axes perpendiculaires sensiblement contenus dans le plan du dessin en figure 2, cette double articulation permettant de déplacer le levier successivement dans les positions P, R, N, D par rotation autour d'un premier axe, puis dans la position M par rotation autour d'un second axe, puis dans les positions + et - par rotation autour du premier axe.

Dans l'exemple de réalisation représenté aux dessins, le levier 12 comprend une tige cylindrique 14 s'étendant à l'extérieur du carter 10 et destinée à être manipulée par le conducteur du véhicule, et reliée par une pièce en U 16 formant chape aux axes d'articulation précités. L'une 18 des deux branches parallèles de la pièce 16 est destinée à coopérer avec un coulisseau 20 qui est guidé en translation dans un boîtier 22 fixé sur une paroi latérale du carter 10, le coulisseau 20 étant déplaçable dans la direction définie par les positions + et - précitées, cette direction étant ici parallèle à celle définie par les positions P, R, N et D. Une encoche 24 est formée dans la partie médiane du coulisseau 20 pour recevoir le bord de la branche 18 de la pièce 16, dont l'épaisseur est sensiblement égale à la dimension correspondante de l'encoche 24 de telle sorte que la branche 18 engagée dans l'encoche 24 y reste maintenue par friction. D'autres moyens pourraient être utilisés à cette fin, par exemple des moyens d'encliquetage ou de billage, ou des moyens magnétiques.

Dans la partie médiane du coulisseau 20 est formée une fente longitudinale 26 qui est perpendiculaire à l'encoche 24 et qui débouche dans celle-ci, pour le guidage en translation d'une plaquette 28 dans une direction parallèle à celle définie par les positions M et D, la plaquette 28 étant sollicitée en direction de la branche 18 du levier par un ressort de rappel 30 monté dans un logement cylindrique formé dans une paroi latérale du boîtier 22. Du côté de la branche 18 du levier 12, la plaquette 28 comprend une branche médiane 32 s'étendant à l'intérieur de l'encoche 24 et deux branches latérales 34 reçues dans des logements borgnes du coulisseau 20 et permettant de définir une position, représentée en figure 2, de la plaquette 28 quand ses branches latérales 34 sont engagées complètement dans les logements borgnes précités du coulisseau.

Dans cette position, la plaquette 28 démasque deux photorécepteurs 36 qui sont alors exposés au flux lumineux émis par une source de lumière 38. Dans la représentation de la figure 2, cette source de lumière 38 se trouve au-dessus du plan du dessin. Dans la représentation de la figure 4, la plaquette 28 est interposée entre la source 38 et les photorécepteurs 36, elle est déplacée perpendiculairement au plan du dessin (dans la fente 26 du coulisseau 20) quand le levier est amené de la position D dans la position M, et elle est déplacée en translation dans le plan du dessin dans la direction indiquée par les flèches pour démasquer l'un ou l'autre des photorécepteurs 36 quand le levier 12 est déplacé dans l'une ou l'autre des positions de commande impulsionnelle + et -.

Les photorécepteurs 36 et la source lumineuse 38 sont montés sur une carte de circuit imprimé fixée sur une paroi latérale du boîtier 22 et sont raccordés à des moyens d'alimentation électrique ainsi qu'à des moyens de commande et des moyens d'exploitation des signaux émis par les photorécepteurs 36. Dans un mode de réalisation préféré de l'invention, la source lumineuse 38 est une diode électroluminescente émettant dans l'infrarouge, et les photorécepteurs 36 sont des phototransistors fonctionnant dans l'infrarouge.

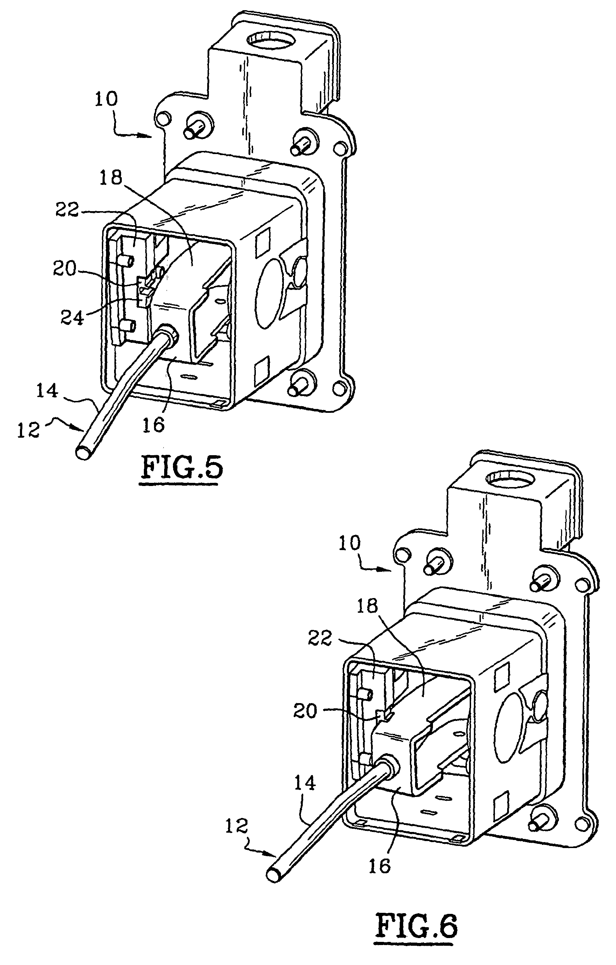

Dans les figures 2 et 5, le levier 12 du dispositif selon l'invention se trouve dans la position D et sa branche 18 est écartée du coulisseau 20 et de la plaquette 28.

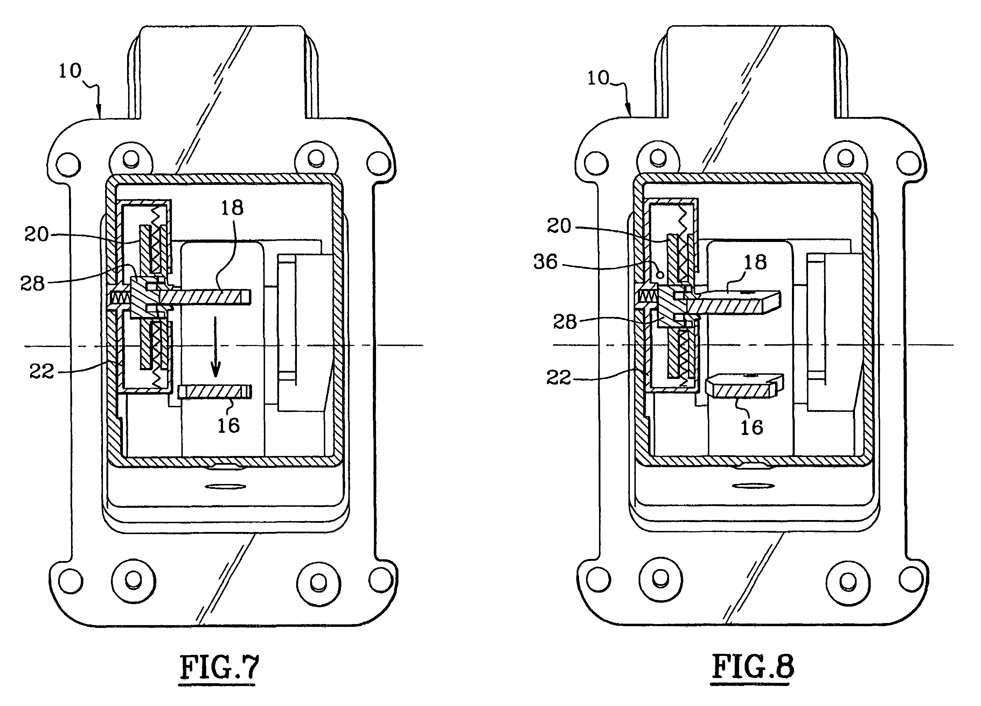

Pour être amené dans la position M à partir de la position D, le levier 12 est déplacé dans le sens indiqué par la flèche F en figure 2, ce qui a pour effet d'engager sa branche 18 dans la fente 24 du coulisseau 20 et de repousser la plaquette 28 à l'encontre de l'action de son ressort de rappel 30, le bord de la branche 18 du levier venant s'appuyer sur la dent centrale 32 de la plaquette, comme représenté aux figures 6 et 7, la plaquette 28 étant ainsi déplacée par translation dans la fente 26 du coulisseau 20, dans le sens indiqué par la flèche F.

Dans cette position représentée aux figures 6 et 7, la plaquette 28 masque les deux photorécepteurs 36 qui ne reçoivent plus le flux lumineux émis par la source 38.

Ensuite, le levier 12 peut être amené dans l'une ou l'autre des positions + et -, par déplacement par exemple dans le sens indiqué par la flèche en figure 7 pour être amené dans la position - représentée en figure 8, ce qui a pour effet de déplacer le coulisseau 20 en translation dans le boîtier 22 dans le même sens que le levier 12, et de déplacer la plaquette 28 qui démasque un des photorécepteurs 36, l'autre photorécepteur restant masqué.

Inversement, si le levier 12 est déplacé dans la position + dans le sens opposé à celui indiqué par la flèche en figure 7, le coulisseau 20 est déplacé en translation dans le boîtier 22 dans la direction opposée à celle représentée en figure 8, et c'est l'autre photorécepteur 36 qui est démasqué par la plaquette 28 et reçoit le flux lumineux émis par la source 38.

Des moyens de rappel, tels que des ressorts hélicoïdaux 40, sont associés au coulisseau 20 dans le boîtier 22 pour le solliciter constamment vers sa position intermédiaire représentée aux figures 2 et 7 à partir de l'une ou de l'autre de ses positions de commande impulsionnelle de vitesse. Ces ressorts 40 prennent par exemple appui par une extrémité sur une paroi du boîtier 22, leur autre extrémité étant reçue dans un logement cylindrique borgne du coulisseau 20.

Ainsi, quand le levier 12 est amené dans l'une des positions + et -, il suffit de le relâcher pour qu'il soit ramené automatiquement dans la position M par l'intermédiaire du coulisseau 20 et de l'un des ressorts de rappel 40. Lorsque la direction de déplacement du levier définie par les positions +, M et - est sensiblement verticale, le poids du levier dans la position M est supporté par l'un des ressorts de rappel 40 du coulisseau 20. Ce ressort de rappel peut donc être dimensionné à cet effet et avoir une raideur supérieure à celle de l'autre ressort de rappel 40, pour compenser au moins partiellement le poids du levier.

Des moyens formant point dur sont associés au coulisseau 20 et comprennent par exemple une bille ou un poussoir 42 sollicité par un ressort 44 vers une encoche 46 du coulisseau. Le poussoir 42 et son ressort 44 sont logés et guidés dans un puits cylindrique du boîtier 22 et sont orientés perpendiculairement à la direction de translation du coulisseau 20. Dans la position intermédiaire du coulisseau, qui correspond à la position M du levier 12, l'extrémité du poussoir 42 est engagée dans l'encoche 46 du coulisseau. Pour déplacer le coulisseau dans un sens ou dans l'autre à partir de sa position intermédiaire, il faut exercer sur lui une force suffisante pour écarter le poussoir 42 en comprimant le ressort 44. L'encoche 46 du coulisseau a la forme d'un V, dont les deux branches constituent des rampes inclinées coopérant avec l'extrémité du poussoir 42. Quand le levier 12 amené dans l'une des positions + et - est relâché, le coulisseau 20 est ramené dans sa position intermédiaire représentée en figure 3 par l'un des ressorts de rappel 40 et le poussoir 42 s'engage automatiquement dans l'encoche 46, ce qui a pour effet de maintenir le coulisseau dans sa position intermédiaire et de définir cette position intermédiaire de façon positive et relativement précise.

Quand le levier 12 est ramené de sa position M dans sa position D, sa branche 18 est dégagée de l'encoche 24 du coulisseau, et le ressort de rappel 30 ramène la plaquette 28 dans sa position représentée en figure 2, où les deux photorécepteurs 36 sont démasqués et reçoivent le flux lumineux émis par la source 38.

Dans le dispositif selon l'invention, les signaux de commande impulsionnelle de passage de vitesse sont fournis par les photorécepteurs 36 quand ils sont tour à tour démasqués par la plaquette 28. Cela permet de fixer avec précision la course nécessaire à l'émission d'un signal de passage de vitesse et de la rendre sensiblement indépendante des tolérances de fabrication et de montage, puisque les photorécepteurs 36 sont toujours masqués et démasqués pour des mêmes positions de la plaquette 28. Cela signifie que les tolérances sur les courses du levier 12 et du coulisseau 20 n'ont pas d'influence sur l'émission des signaux de commande impulsionnelle de passage de vitesse. En outre, si on désire modifier cette commande, il suffit de changer la plaquette 28 pour la remplacer par une autre plaquette dont la partie servant au masquage et au démasquage des photorécepteurs 36 a une forme et/ou des dimensions différentes.

Dans ce dispositif, les positions D, M, + et - sont identifiées par des états différents des signaux de sortie des photorécepteurs 36 :
- position D = 1 - 1
- position M = 0 - 0
- position + = 0 - 1
- position - = 1 - 0
1 indiquant un niveau haut et 0 un niveau bas du signal de sortie d'un photorécepteur. La commande de vitesses dans les positions P, R, N et D peut être mécanique (à câbles) ou électrique.

De façon générale, le dispositif selon l'invention présente les avantages suivants par rapport aux dispositifs concurrents de la technique antérieure :
- un très faible encombrement,
- une usure plus faible (nombre de pièces mobiles réduit),
- un sous-ensemble de commande formé par le boîtier, le coulisseau, la plaquette, la source lumineuse, les photorécepteurs et un circuit imprimé associé,
- une possibilité de pose des composants en automatique,
- une insensibilité aux champs magnétiques et aux agents environnants,
- un seul coulisseau avec un rappel permettant de compenser le poids du levier, et un seul système de point dur,
- un prix de revient plus faible.

## Revendications

1. Dispositif de commande impulsionnelle de passage de vitesse, comprenant un levier de commande (12) déplaçable dans des directions perpendiculaires entre au moins une première position (D) de commande automatique, une deuxième position (M) de commande manuelle et deux positions de commande impulsionnelle, des moyens de commutation commandés par le levier (12) pour produire des signaux électriques dans lesdites positions du levier, lesdits moyens de commutation comprenant deux commutateurs de signal (44) et des moyens (30) de commutation de signal déplaçables par le levier (16) entre une première position où ils permettent la réception par les deux commutateurs de signal, une deuxième position où ils empêchent la réception de ce flux par les deux commutateurs de signal et deux autres positions où ils permettent la réception du flux par un commutateur de signal et interdisent sa réception par l'autre commutateur de signal, et des moyens de rappel du levier dans sa deuxième position à partir de ses deux positions de commande impulsionnelle, **caractérisé en ce que** lesdits moyens de commutation comprennent une source lumineuse (38) associée à deux photorécepteurs (36) et **en ce que** le levier (12) est solidarisé dans sa deuxième position (M) avec des moyens formant écran qui comprennent une plaquette (28) guidée en translation sur un coulisseau (20) parallèlement à la direction de déplacement du levier entre sa première position (D) et sa deuxième position (M), le coulisseau étant lui-même guidé en translation parallèlement à la direction de déplacement du levier entre ses deux positions (+, -) de commande impulsionnelle, ladite source lumineuse (38) et les photorécepteurs (36) étant agencés de part et d'autre de la plaquette (28) et de sa trajectoire en translation, le levier (12) étant solidarisable avec les moyens (20,28) formant écran par déplacement de sa première position (D) dans sa deuxième position (M) et désolidarisable des moyens (20,28) formant écran par déplacement de sa deuxième position (M) dans sa première position (D).

2. Dispositif selon la revendication 1, **caractérisé en ce que** la source lumineuse (38) est une diode électroluminescente émettant dans l'infrarouge, et les photorécepteurs (36) sont des phototransistors fonctionnant dans l'infrarouge.

3. Dispositif selon la revendication 1 ou 2, **caractérisé en ce qu'**une partie (18) du levier (12) vient s'appliquer sur la plaquette (28) dans la deuxième position (M) du levier et la déplace en translation sur le coulisseau à l'encontre de l'action d'un moyen de rappel (30), cette partie (18) du levier étant alors engagée dans une encoche (24) du coulisseau et y restant maintenue, par exemple par friction.

4. Dispositif selon la revendication 1, 2 ou 3 **caractérisé en ce que** le coulisseau (20) est associé à des moyens de rappel (40) le sollicitant vers une position intermédiaire située entre les deux positions de commande impulsionnelle, ces moyens de rappel comprenant deux ressorts agissant sur les extrémités du coulisseau (20) dans des directions opposées.

5. Dispositif selon la revendication 4, **caractérisé en ce que** les moyens (40) de rappel du coulisseau dans sa position intermédiaire constituent les moyens de rappel du levier (12) dans sa deuxième position (M), l'un de ces moyens de rappel étant dimensionné pour supporter le poids du levier (12) dans cette deuxième position.

6. Dispositif selon l'une des revendications 1 à 5, **caractérisé en ce que** le coulisseau (20) est associé à des moyens formant point dur, tels qu'une bille ou un poussoir (42) chargé par un ressort (44) et s'engageant dans une encoche (46) du coulisseau lorsque celui-ci est dans sa position intermédiaire.

7. Dispositif selon l'une des revendications 1 à 6, **caractérisé en ce que** la plaquette (28) est guidée en translation dans une fente ou lumière transversale (26) du coulisseau (20).

8. Dispositif selon l'une des revendications 1 à 7, **caractérisé en ce que** la plaquette (28), le coulisseau (20), leurs moyens de rappel (30, 40), la source lumineuse (38) et les photorécepteurs (36) sont contenus dans un boîtier (22) fixé sur le carter (10) de montage du levier (12).

## Patentansprüche

1. Impulssteuerungsvorrichtung zur Gangschaltung, die einen in senkrechten Richtungen zwischen mindestens einer automatischen Steuerungsposition (D), einer zweiten manuellen Steuerungsposition (M) und zwei Impulssteuerungspositionen verstellbaren Steuerhebel (12), durch den Hebel (12) zu steuernde Umschaltmittel zwecks Erzeugung elektrischer Signale in den besagten Positionen des Hebels - wobei die Umschaltmittel zwei Signalschalter (44) und Signalumschaltmittel (30) aufweisen, die durch den Hebel (16) zwischen einer ersten Position, in der sie den Empfang durch die beiden Signalschalter ermöglichen, einer zweiten Position, in der sie den Empfang dieses Flusses durch die beiden Signalschalter verhindern, und zwei weiteren Positionen, in denen sie den Empfang des Flusses über einen Signalschalter ermöglichen und seinen Empfang durch den anderen Signalschalter unterbinden, verschoben werden können - und Rückholmittel des Hebels in seiner zweiten Position ab seinen beiden Impulssteuerungspositionen umfasst, **dadurch gekennzeichnet, dass** die Umschaltmittel eine Lichtquelle (38) aufweisen, die mit zwei Photorezeptoren (36) verbunden ist, und dadurch, dass der Hebel (12) in seiner zweiten Position (M) mit eine Blende bildenden Mitteln verbunden ist, die eine Platte (28) aufweisen, deren Bewegung durch einen Schieber (20) parallel zur Stellrichtung des Hebels zwischen seiner ersten Position (D) und seiner zweiten Position (M) geführt wird, wobei die Bewegung des Schiebers selbst parallel zur Stellrichtung des Hebels zwischen seinen beiden Impulssteuerungspositionen (+, -) geführt wird, wobei die Lichtquelle (38) sowie die Photorezeptoren (36) beidseitig von der Platte (28) und ihrer Bewegungsbahn angeordnet werden und der Hebel (12) durch Verstellung von seiner ersten Position (D) in seine zweite Position (M) mit den eine Blende bildenden Mitteln (20, 28) verbunden und durch Verstellung von seiner zweiten Position (M) in seine erste Position (D) von diesen eine Blende bildenden Mitteln (20, 28) gelöst werden kann.

2. Vorrichtung nach Anspruch 1, **dadurch gekennzeichnet, dass** die Lichtquelle (38) eine Leuchtemissionsdiode ist, die im Infrarot ausstrahlt, und die Photorezeptoren (36) Phototransistoren sind, die im Infrarot wirken.

3. Vorrichtung nach Anspruch 1 oder 2, **dadurch gekennzeichnet, dass** ein Teil (18) des Hebels (12) in der zweiten Position (M) des Hebels auf der Platte (28) aufliegt und sie entgegen der Wirkung eines Rückholmittels (30) über den Schieber bewegt, wobei dieser Teil (18) des Hebels in eine Raste (24) des Schiebers eingreift und hier beispielsweise durch Reibung gehalten wird.

4. Vorrichtung nach Anspruch 1, 2 oder 3, **dadurch gekennzeichnet, dass** der Schieber (20) mit Rückholmitteln (40) verbunden ist, die ihn in eine Zwischenposition zwingen, die sich zwischen den beiden Impulssteuerungspositionen befindet, wobei diese Rückholmittel zwei Federn aufweisen, die auf die Enden des Schiebers (20) in entgegengesetzte Richtungen wirken.

5. Vorrichtung nach Anspruch 4, **dadurch gekennzeichnet, dass** die Rückholmittel (40) des Schiebers in seiner Zwischenposition die Rückholmittel des Hebels (12) in seiner zweiten Position (M) bilden, wobei eines dieser Rückholmittel so bemessen ist, um dem Gewicht des Hebels (12) in dieser zweiten Position standzuhalten.

6. Vorrichtung nach einem der Ansprüche 1 bis 5, **dadurch gekennzeichnet, dass** der Schieber (20) mit Mitteln, die eine schwergängige Stelle bilden, wie beispielsweise einer Kugel oder einem durch eine Feder (44) belasteten Stopper (42) verbunden ist, die in eine Raste (46) des Schiebers eingreifen, wenn sich dieser in seiner Zwischenposition befindet.

7. Vorrichtung nach einem der Ansprüche 1 bis 6, **dadurch gekennzeichnet, dass** die Platte (28) in einem Spalt oder einer quer verlaufenden Öffnung (26) des Schiebers (20) bewegt wird.

8. Vorrichtung nach einem der Ansprüche 1 bis 7, **dadurch gekennzeichnet, dass** die Platte (28), der Schieber (20), ihre Rückholmittel (30, 40), die Lichtquelle (38) und die Photorezeptoren (36) in einem Gehäuse (22) enthalten sind, das am Montagekasten (10) des Hebels (12) befestigt wird.

## Claims

1. A device for impulse control of gear change, the device comprising a control lever (12) movable in perpendicular directions between at least a first position (D) for automatic control, a second position (M) for manual control, and two impulse control positions, switch means controlled by the lever (12) to produce electrical signals in said positions of the lever, said switch means comprising two signal switches (44) and signal switching means (30) movable by the lever (16) between a first position in which they enable both signal switches to receive, a second position in which they prevent said flux being received by both signal switches, and two other positions in which they enable the flux to be received by one of the signal switches while preventing it from being received by the other signal switch, and means for returning the lever into its second position from each of its impulse control positions, the device being **characterized in that** said switch means comprise a light source (38) associated with two photoreceivers (36), and **in that** the lever (12) is secured in its second position (M) to screen-forming means that comprise a plate (28) guided to move in translation on a slide (20) parallel to the direction in which the lever moves between its first position (D) and its second position (M), the slide itself being guided to move in translation parallel to the direction in which the lever moves between its two impulse control positions (+, -), said light source (38) and said photoreceivers (36) being arranged on either side of the plate (28) and its path for moving in translation, the lever (12) being securable to the screen-forming means (20, 28) by being moved from its first position (D) into its second position (M), and being releasable from the screen-forming means (20, 28) by being moved from its second position (M) into its first position (D).

2. A device according to claim 1, **characterized in that** the light source (38) is a light-emitting diode emitting in the infrared, and the photoreceivers (36) are phototransistors operating in the infrared.

3. A device according to claim 1 or claim 2, **characterized in that** a portion (18) of the lever (12) bears against the plate (28) in the second position (M) of the lever and moves the plate in translation on the slide against the action of return means (30), said portion (18) of the lever then being engaged in a notch (24) of the slide and remaining held therein, e.g. by friction.

4. A device according to claim 1, 2, or 3, **characterized in that** the slide (20) is associated with return means (40) urging it towards an intermediate position situated between the two impulse control positions, said return means comprising two springs acting on the ends of the slide (20) in opposite directions.

5. A device according to claim 4, **characterized in that** the means (40) for returning the slide into its intermediate position constitute means for returning the lever (12) into its second position (M), one of said return means being dimensioned to support the weight of the lever (12) in said second position.

6. A device according to any one of claims 1 to 5, **characterized in that** the slide (20) is associated with means forming a hard point, such as a ball or a pusher (42) biased by a spring (44) and engaging in a notch (46) of the slide when the slide is in its intermediate position.

7. A device according to any one of claims 1 to 6, **characterized in that** the plate (28) is guided in translation in a slot or through opening (26) in the slide (20).

8. A device according to any one of claims 1 to 7, **characterized in that** the plate (28), the slide (20), their return means (30, 40), the light source (38), and the photoreceivers (36) are contained in a housing (22) fixed on the casing (10) for mounting the lever (12).
